# FASCICULE DE BREVET EUROPEEN

(11) **EP 3 839 648 B1**
(45) Date de publication et mention de la délivrance du brevet: **02.09.2026**
(21) Numéro de dépôt: 19217582.6
(22) Date de dépôt: 18.12.2019
(51) Int. Cl.: G04B 13/02, G04B 15/14, G04B 31/08

(54) **PROCEDE DE FABRICATION D'UNE PIECE MECANIQUE POURVUE D'UNE ZONE FONCTIONNELLE MAGNETIQUE**
HERSTELLUNGSVERFAHREN EINES MECHANISCHEN BAUTEILS, DAS MIT EINEM MAGNETISCHEN FUNKTIONSBEREICH AUSGESTATTET IST
METHOD FOR MANUFACTURING A MECHANICAL PART PROVIDED WITH A MAGNETIC FUNCTIONAL AREA

(43) Date de publication de la demande: 23.06.2021
(73) Titulaire: ETA SA Manufacture Horlogère Suisse, 2540 Grenchen (CH)
(72) Inventeur: HUOT-MARCHAND, Sylvain, CH-2743 Eschert (CH)
(74) Mandataire: ICB SA

(56) Documents cités:
- EP-B1- 2 638 436
- CH-A2- 710 846
- CN-B- 101 280 803
- CN-B- 101 799 111

## Description

### Domaine technique de l'invention

L'invention concerne un procédé de fabrication d'une pièce mécanique horlogère pourvue d'une zone fonctionnelle magnétique.

L'invention concerne également une pièce mécanique horlogère obtenue selon un tel procédé de fabrication. La pièce mécanique est typiquement une roue, une platine, une levée d'ancre, un balancier ou encore un axe.

Le brevet EP 2 638 436 B1 décrit par exemple un dispositif horloger comprenant un pivot magnétique et une extrémité d'un composant constituant un réservoir d'huile, selon un état de la technique antérieure à l'invention.

### Etat de la technique

Dans le domaine des composants mécaniques en contact frictionnel et en déplacement relatif, tel que par exemple le domaine de l'horlogerie, le bon fonctionnement des pièces mécaniques dépend entre autres de leur lubrification. La fonction principale d'un lubrifiant ainsi utilisé est de séparer les surfaces en contact en déplacement relatif tout en réduisant les dissipations d'énergie et l'usure.

Les lubrifiants utilisés se répartissent principalement entre deux catégories : les lubrifiants fluides et les lubrifiants utilisant une lubrification dite solide de mécanismes. Les lubrifiants solides, qui possèdent généralement une structure lamellaire, sont moins utilisés dans le domaine de l'horlogerie que les lubrifiants fluides, car ils sont intrinsèquement générateurs de débris. De tels lubrifiants solides présentent ainsi l'inconvénient de provoquer des usures mécaniques à plus ou moins long terme. Or de telles usures, difficilement prévisibles, s'avèrent très préjudiciables pour la fiabilité d'un mouvement horloger.

Les lubrifiants fluides se présentent généralement sous la forme de graisses ou d'huiles plus ou moins visqueuses. Ils présentent l'avantage d'être plus faciles et plus rapides à appliquer que les lubrifiants solides. Le volume de lubrifiant à employer est en outre plus facilement contrôlable. Les caractéristiques physiques des huiles (viscosité, mouillabilité, etc.) permettent la lubrification de plusieurs zones fonctionnelles d'un mécanisme, indépendamment de la complexité de ce dernier. L'énergie générée par frottement se traduisant par un échauffement est principalement dissipée par l'huile. Lors du fonctionnement, un film d'huile se reforme généralement, même après rupture et avec un volume utilisé faible. Le fluide doit autant que possible rester confiné dans les zones fonctionnelles alors qu'il tend naturellement à s'étaler. La durabilité du lubrifiant dépend ainsi de son maintien dans la zone de fonctionnement : tout horloger a cependant constaté qu'une goutte de lubrifiant s'étale rapidement sur une pièce propre. Si cette aptitude s'avère bénéfique puisque toutes les zones sensibles d'un mécanisme sont effectivement recouvertes, elle peut également s'avérer préjudiciable au bon fonctionnement de l'ensemble. En effet, une perte d'huile dans des régions critiques, typiquement des zones de contact et de déplacement relatif des pièces (zones fonctionnelles), accentuée par une dégradation potentielle de celle-ci dans des conditions de fonctionnement sévères, peut provoquer des avaries irréversibles. En outre, le lubrifiant peut se placer à des endroits indésirables et causer des problèmes d'adhésion ou, plus généralement, des problèmes esthétiques.

L'étalement des lubrifiants fluides, qu'ils se présentent sous forme d'huiles ou de graisses, pose donc un problème majeur pour le fonctionnement des mécanismes horlogers. Dans le cas des graisses, on assiste en effet très souvent à une démixtion entre le savon et l'huile de base. Cette dernière va donc pouvoir migrer sur les surfaces de la pièce et quitter les zones fonctionnelles, ce qui ramène au problème évoqué ci-dessus pour les lubrifiants fluides sous forme d'huiles. De manière générale, un lubrifiant fluide tient en place quand sa tension superficielle est plus haute que celle du support sur lequel il est déposé. Si la tension superficielle du lubrifiant est trop basse, l'huile s'étale et ne reste pas à sa place.

Afin de résoudre ce problème, les horlogers déposent sur leurs composants un revêtement appelé épilame. Cet épilame, qui se présente souvent sous forme d'une couche moléculaire invisible oléophobe, est un produit qui diminue la tension superficielle apparente du support. Il convient de noter que la tension de surface donnée par un épilame est de l'ordre de 20 à 30 mN/m tandis que la tension de surface d'une huile horlogère est typiquement de 35 mN/m. Cette différence de 5 à 15 mN/m donne une forme de goutte avec un angle de raccordement acceptable pour les horlogers. Il est généralement de l'ordre de 25 à 60. Cela permet de garder le lubrifiant dans la zone voulue. Un angle plus important peut conduire à un déplacement non voulu (bille de lubrifiant roulant sur la surface comme l'eau sur du Gore-Tex^{™} neuf par exemple).

Cet épilame peut être déposé de plusieurs façons mais le procédé majoritairement connu pour ce faire consiste à tremper la pièce mécanique à épilamer dans une solution composée d'un solvant et d'une certaine quantité de molécules y solubilisées qui se déposeront sur la surface de la pièce de façon à modifier sa tension de surface. Le solvant est ensuite évaporé au cours d'une étape suivante, laissant seule la couche de molécules déposée. L'épilame recouvre alors la totalité de la surface de la pièce. Dans les premiers instants de fonctionnement et dans les zones de frottement, l'épilame est éliminé par abrasion, laissant une surface que le lubrifiant peut mouiller. Certains mécanismes critiques comme l'échappement peuvent être laissés à fonctionner pendant une durée minimale pour que se produise cette abrasion de l'épilame. Une fois cette opération terminée, une nouvelle lubrification est effectuée. Le lubrifiant mouille alors les surfaces où l'abrasion a été réalisée exactement à l'endroit de frottement.

Toutefois, un des inconvénients majeurs d'un tel procédé de dépôt par trempage est lié au fait qu'il requiert de tremper une grande quantité de pièces dans des bains dont les concentrations en molécules "actives" diminuent, ce qui impose un suivi régulier de process et qui entraine un possible risque technique d'avoir une concentration trop faible et donc un effet épilame trop faible. De plus les solvants d'épilamage à bases de composés fluorés mis en œuvre par ce procédé contreviennent souvent aux normes en vigueur notamment prévues pour lutter contre l'émission de gaz à effet de serre. Et enfin, ce procédé prévoit notamment une concentration trop importante de molécules "actives" ou un solvant plus écologique mais moins volatil qui peut causer des taches lors de l'opération d'épilamage. Or elles peuvent être localisées loin des zones fonctionnelles et donc ne pas nécessiter d'épilamage.

On comprend qu'il existe un besoin de trouver une solution, notamment qui ne présente pas les inconvénients de l'art antérieur.

### Résumé de l'invention

L'invention a donc pour but de fournir un procédé de fabrication d'une pièce mécanique horlogère permettant de définir des parties de la pièce délimitant des zones fonctionnelles précises de confinement d'un lubrifiant, et ce de manière simple et robuste.

A cet effet, l'invention concerne un procédé de fabrication d'une pièce mécanique horlogère comprenant au moins une zone fonctionnelle dans laquelle un lubrifiant est susceptible d'être confiné, le procédé comprenant une étape de construction d'une ébauche de ladite pièce comportant ladite au moins une zone fonctionnelle et une étape de transformation de ladite au moins une zone fonctionnelle en une zone fonctionnelle aimantée apte à coopérer avec ledit lubrifiant présentant des propriétés magnétiques dans la réalisation dudit confinement du lubrifiant dans ladite au moins une zone.

Grâce à de telles caractéristiques, la zone fonctionnelle aimantée permet ainsi de confiner le lubrifiant magnétique sur la surface de contact fonctionnelle de cette zone en exerçant une force d'attraction sur ce lubrifiant pour l'attirer et la conserver sur cette surface.

Suivant l'invention:
- l'étape de transformation comprend une sous-étape de réalisation d'au moins un canal dans une partie du corps de l'ébauche localisée dans ladite au moins une zone fonctionnelle notamment en dessous d'une surface de contact fonctionnelle comprise dans la dite au moins une zone ;
- l'étape de transformation comprend une sous-étape d'agencement dans ledit au moins un canal d'une matière développant un champ magnétique ;
- la sous-étape d'agencement comprend une phase d'insertion d'un fluide, notamment d'une résine réticulable, comprenant des particules magnétiques dans ledit au moins un canal ;
- la sous-étape d'agencement comprend une phase de magnétisation des particules magnétiques comprises dans ledit fluide ;
- la sous-étape d'agencement comprend une phase de définition d'une orientation de la polarité des particules magnétiques comprises dans ledit fluide relativement à une polarité dudit lubrifiant ;
- la sous-étape d'agencement comprend une phase de durcissement dudit fluide comprenant les particules magnétiques magnétisées et pourvues d'une polarité orientée.

Selon certains modes de réalisation:
- les phases de magnétisation, de définition et de durcissement sont réalisées sensiblement simultanément ou simultanément ;
- la phase durcissement consiste en une polymérisation par photo-réticulation et/ou par réticulation chimique ;
- la sous-étape d'agencement comprend une phase d'insertion d'au moins un aimant permanent dans ledit au moins un canal ;
- la sous-étape d'agencement comprend une phase de maintien mécanique dudit au moins un aimant permanent dans ledit au moins un canal, et
- l'étape de transformation comprend une sous-étape d'application d'un fluide comprenant des particules magnétiques sur une surface arrière de ladite au moins une zone fonctionnelle agencée sensiblement à l'opposé d'une surface de contact fonctionnelle de cette zone.

L'invention concerne aussi une pièce mécanique horlogère susceptible d'être obtenue selon un tel procédé.

Avantageusement, la pièce comprend au moins une zone fonctionnelle dans laquelle un lubrifiant est susceptible d'être confiné, ladite zone fonctionnelle étant aimantée et apte à coopérer avec ledit lubrifiant lorsqu'il présente des propriétés magnétiques.

En particulier, la pièce est réalisée en une matière amagnétique et/ou ayant un indice de perméabilité magnétique faible voire nul.

### Brève description des figures

Les buts, avantages et caractéristiques du procédé de fabrication d'une pièce mécanique horlogère selon l'invention apparaîtront mieux dans la description suivante sur la base d'au moins une forme d'exécution non limitative illustrée par les dessins sur lesquels :
- la figure 1 est un organigramme représentant des étapes d'un procédé de fabrication d'une pièce mécanique, notamment horlogère, pourvue d'au moins une zone fonctionnelle magnétique selon un mode de réalisation de l'invention, et
- la figure 2 est une vue schématique d'une variante de la pièce mécanique horlogère comprenant cette dite au moins une zone fonctionnelle magnétique confinant un lubrifiant magnétique selon le mode de réalisation de l'invention.

### Description détaillée de l'invention

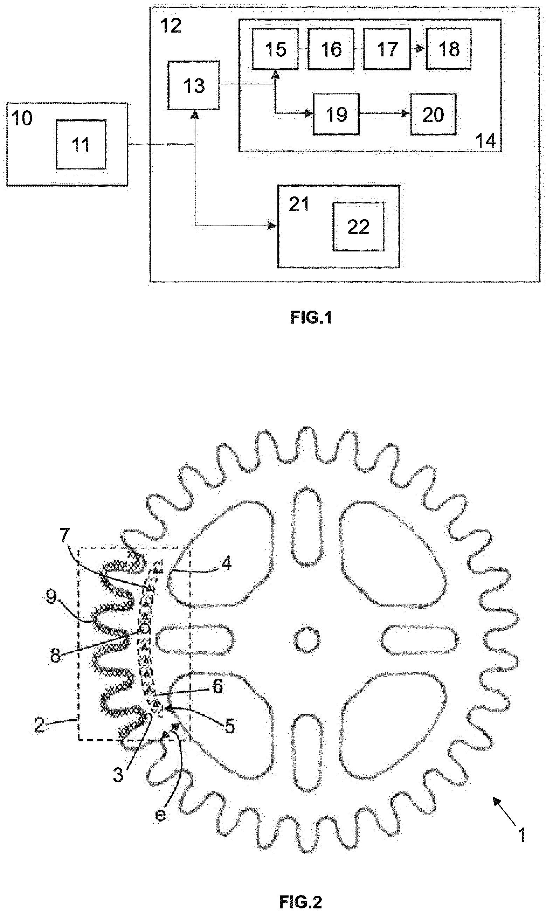

La figure 1 représente un procédé de fabrication d'une pièce mécanique 1 notamment une pièce micromécanique selon un mode de réalisation de l'invention. Une telle pièce mécanique 1 est notamment définie pour coopérer avec une autre pièce mécanique au niveau de zones fonctionnelles 2 et ce, grâce en particulier à l'utilisation d'un lubrifiant 9 ayant pour rôle de séparer les surfaces en contact 3 en déplacement relatif tout en réduisant les dissipations d'énergie et l'usure. Ces surfaces 3 autrement appelées surfaces de contact fonctionnelles 3 sont comprises dans les zones dites fonctionnelles 2 définies dans ces pièces 1. Une zone fonctionnelle 2 est donc une partie du corps d'une pièce mécanique 1 qui se distingue des autres parties de corps de la pièce 1 en ce que cette zone 2 est spécifiquement prévue pour participer à la réalisation de la fonction attendue de cette pièce mécanique 1 en coopérant par exemple avec au moins une zone fonctionnelle 2 d'une autre pièce mécanique 1 lorsque ces pièces 1 sont des maillons d'une chaine cinématique. Une telle pièce 1 peut être une pièce 1 d'un objet utilisant des composants mécaniques ou micromécaniques en déplacement relatif et dont les contacts sont lubrifiés avec un lubrifiant 9 fluide pouvant migrer et ainsi altérer la fonction tribologique. Cette pièce 1 peut être également à titre d'exemple une pièce mécanique 1 d'un mouvement horloger autrement appelée « pièce mécanique horlogère ». Une telle pièce mécanique 1 horlogère peut être une roue dentée telle que celle qui est illustrée sur la figure 2 ou encore une roue d'échappement, une ancre ou encore tous autres pièces pivotées comme les arbres. Dans ce contexte, lorsque la pièce 1 est une roue, elle comprend alors une surface de contact fonctionnelle 3 et une surface arrière 4 préférentiellement opposée à la surface de contact 3, lesdites surfaces 3, 4 étant séparées l'une de l'autre par l'épaisseur référencée e de cette roue définie dans cette zone fonctionnelle 2.

Un tel procédé comprend une étape de construction 10 d'une ébauche de ladite pièce comportant au moins une zone fonctionnelle 2. Cette étape 10 du procédé comprend une sous-étape d'édification 11 d'un corps de ladite ébauche. Une telle sous-étape 11 peut par exemple prévoir la mise en œuvre d'un processus de gravure de couches/substrats à base par exemple d'une matière comme le silicium de manière similaire au processus effectué dans le document WO9815504A1. Cette sous-étape 11 peut aussi prévoir de manière alternative la réalisation de ce corps de l'ébauche selon un processus de fabrication du corps de cette ébauche en silicium renforcé selon la technologie mise en œuvre dans le document CH701499A2. Dans une autre alternative, cette sous-étape 11 peut également prévoir la mise en œuvre d'une technologie d'impression en trois dimensions pour la réalisation de ce corps de l'ébauche comme par exemple celle décrite dans le document WO2019106407A1. Ce corps de l'ébauche est préférentiellement réalisé dans une matière amagnétique et/ou avoir un indice de perméabilité magnétique faible voire nul. Cette matière peut être de manière non limitative et non exhaustive :
- Verres : silice fondue, quartz fondu, aluminosilicate, borosilicate, etc..
- Matériaux sous forme cristalline ou polycristalline : Silicium, Germanium, carbure de Silicium, nitrure de Silicium, quartz, etc..
- Matériaux cristallins : rubis, saphir, diamant, etc..
- Matériaux céramiques et vitrocéramiques.
- Matériaux polymères y compris les verres organiques comme les polycarbonates ou les acryliques.
- Matériaux métalliques sous formes cristalline ou amorphe.

Un tel corps de l'ébauche présente la forme ainsi que toutes les caractéristiques de la pièce mécanique 1 pourvue d'au moins une zone fonctionnelle 2 à l'exception des aménagements/modifications prévues de cette ébauche pour la transformation de ladite au moins une zone fonctionnelle 2 en une zone fonctionnelle 2 aimantée. Ainsi dans ce contexte, le procédé comprend donc une étape de transformation 12 de ladite au moins une zone fonctionnelle 2 en une zone fonctionnelle 2 aimantée apte à coopérer avec ledit lubrifiant 9 lorsqu'il présente des propriétés magnétiques. Un telle zone fonctionnelle 2 aimantée est spécifiquement définie pour participer à assurer le confinement du lubrifiant 9 dans cette dite au moins une zone.

Pour ce faire cette étape 12 comprend une sous-étape de réalisation 13 d'au moins un canal 5 dans une partie du corps de l'ébauche localisée dans ladite au moins une zone fonctionnelle 2 derrière la surface de contact fonctionnelle comprise dans ladite au moins une zone. Un tel dit au moins un canal 5 qui est réalisée dans l'épaisseur e d'une partie du corps de l'ébauche où est localisée la zone fonctionnelle 2, présente de préférence une dimension faible. A titre d'exemple, la section d'un tel canal 5 présente une surface inférieure à 25'000 µm², de préférence inférieure à 10'000 µm².

Une telle sous-étape 13 peut prévoir la formation d'un tel canal 5 à partir d'un laser à impulsions femtosecondes et ce, selon une technologie décrite dans le document WO2019106407A1. Ce canal 5 est défini dans l'épaisseur du corps de l'ébauche en dessous de la surface de contact 3 de la zone fonctionnelle 2. Ce un canal 5 présente une forme et une disposition dans la zone fonctionnelle 2 visant à assurer un confinement du lubrifiant 9 sur la surface de contact 3 de la zone fonctionnelle 2 et ce, en fonction du type de pièce mécanique 1 et/ou de la fonction recherchée pour cette pièce qui est assurée notamment par la zone fonctionnelle 2. La disposition du canal 5 dans la zone fonctionnelle 2, est définie relativement à la surface de contact 3 plus précisément en fonction de la distance/épaisseur e présent entre cette surface de contact 3 et le canal 5. De plus, cette disposition peut être également définie relativement à la longueur et/ou largeur et/ou l'étendue de cette surface de contact 3 de la zone fonctionnelle 2.

Un tel canal 5 comprend une ouverture 8 qui est définie dans la face latérale du corps de l'ébauche comprise dans la zone fonctionnelle 2 ou dans la surface arrière 4 de cette zone fonctionnelle 2, cette ouverture 8 relie une enceinte de ce canal 5 à l'environnement extérieure du corps de l'ébauche. Dans le présent mode de réalisation, où la pièce mécanique 1 illustrée sur la figure 2 est une roue, cette ouverture 8 est définie dans la face latérale de la zone fonctionnelle 2 de la roue. On notera qu'une pluralité de canaux 5 peuvent être définis dans la zone fonctionnelle 2 en formant ainsi un réseau de canaux non représenté sur la figure 2. Dans une telle configuration la forme et la répartition de ces canaux dans la zone fonctionnelle, sont alors effectuées pour assurer un confinement du lubrifiant 9 sur la surface de contact de la zone fonctionnelle et ce, en fonction du type de la pièce mécanique 1 et/ou de la fonction recherchée pour cette pièce 1 qui est assurée notamment par la zone fonctionnelle. La répartition de ces canaux de ce réseau dans la zone fonctionnelle, est définie relativement à la surface de contact plus précisément en fonction de la distance/l'épaisseur e présent entre cette surface de contact 3 et le canal 5. De plus cette répartition peut être également définie relativement à la longueur et/ou largeur et/ou l'étendue de cette surface de contact 3 de la zone fonctionnelle 2.

Cette étape de transformation 12 comprend ensuite une sous-étape d'agencement 14 dans l'enceinte dudit au moins un canal 5 d'une matière développant un champ magnétique. Une telle matière développant un champ magnétique peut être un fluide 6 tel qu'un polymère comprenant des particules magnétiques 7 comme par exemple du Samarium-Cobalt ou de Néodyme-Fer-Bore ou encore des particules ferromagnétiques. Ce fluide 6 comprenant ces particules magnétiques 7, est typiquement photodurcissable, thermodurcissable ou encore durcissable chimiquement. Autrement dit ce fluide 6 peut être un polymère photodurcissable ou thermodurcissable, tel que par exemple une résine époxy réticulable. On notera que lorsque le fluide 6 est durcississable chimiquement, il comprend alors deux composants : un polymère tel que la résine, par exemple époxy, et un agent polymérisant, par exemple le 1,4,7,10-tétraazadécane, pour le durcissement. Au contact de ces deux composants, un matériau solide, par exemple le polyépoxyde, est formé. Ce durcissement chimique fonctionne selon un principe similaire à celui de la colle bicomposant AralditeTM.

Cette sous-étape 14 comprend une phase d'insertion 15 de ce fluide 6 comprenant des particules magnétiques 7 dans ledit au moins un canal 5. Lors de cette phase 15, le fluide 6 comprenant ces particules magnétiques 7, est introduit via l'ouverture 8 dudit au moins un canal 5 dans l'enceinte de ce dernier. Par la suite, cette sous-étape 14 comprend une phase de magnétisation 16 des particules magnétiques 7 comprises dans ce fluide 6 et une phase de définition 17 d'une orientation de la polarité des particules magnétiques 7 comprises dans ledit fluide 6 relativement une polarité dudit lubrifiant 9. Ces deux phases de magnétisation 16 et de définition 17 sont réalisées à partir d'un aimant permanent qui est alors agencé à proximité de la zone fonctionnelle 2 comprenant ledit canal 5 dans lequel est compris le fluide 6. A titre d'exemple, dans cette configuration, l'aimant permanent peut être agencé en regard de la surface de contact 3. Ainsi, à partir de cet aimant permanent ces particules magnétiques 7 sont alors magnétisées de manière à ce que leur polarité soit orientée selon un sens bien défini qui est complémentaire au sens de polarité du lubrifiant magnétique 9. Par complémentaire, il convient d'entendre ici que les sens de polarité du lubrifiant 9 et des particules magnétiques 7 sont tels qu'ils permettent d'assurer une attraction entre le lubrifiant magnétique 9 et la zone fonctionnelle 2 comprenant les particules magnétiques 7 et donc le confinement de ce lubrifiant 9 dans la zone fonctionnelle 2 comprenant ces particules magnétiques 7. Ensuite, la sous-étape 14 comprend une phase de durcissement 18 dudit fluide 6 comprenant les particules magnétiques 7 magnétisées et pourvues d'une polarité orientée. Cette phase de durcissement 18 consiste en une polymérisation par photo-réticulation, thermo-réticulation et/ou par réticulation chimique lorsque le fluide 6 est un polymère réticulable. Autrement dit, la réticulation est réalisée thermiquement par un passage au four, un chauffage par laser ou encore via un rayonnement électromagnétique pour autant que la matière constituant le corps de l'ébauche dans lequel ledit au moins un canal a été réalisé est transparent aux longueurs d'ondes considérées. **Il** est également possible d'envisager une réticulation chimique via l'utilisation de deux composants comme une colle bi-composants fonctionnant selon le principe de la colle bicomposant AralditeTM. **Il** est également possible selon le choix de la résine utilisée qu'une réticulation naturelle soit suffisante dans le cas par exemple où cette résine comprend un solvant. En effet, un bref instant à l'air libre suffit pour que le solvant s'évapore et que la résine réticule "toute seule".

On notera que les phases de magnétisation 16, de définition 17 et de durcissement 18 sont réalisées simultanément ou sensiblement simultanément.

Dans une variante du procédé, la sous-étape d'agencement 14 peut prévoir en remplacement des phases d'insertion 15, de magnétisation 16, de définition 17 et de durcissement 18 du fluide 6, les phases suivantes :
- une phase d'insertion 19 d'au moins un aimant permanent dans ledit au moins un canal 5, et
- une phase de maintien mécanique 20 dudit au moins un aimant permanent dans ledit au moins un canal 5.

Lors de la phase d'insertion 19, ledit au moins un aimant permanent qui est ici un aimant massif, est agencé/placé/chassé dans le canal 5 de manière à avoir une polarité orientée selon un sens défini qui est complémentaire au sens de polarité du lubrifiant magnétique 9. Chaque aimant peut avoir une forme particulière qui est définie selon le type de la pièce mécanique 1 et/ou de la fonction recherchée pour cette pièce afin d'assurer un confinement optimal du lubrifiant magnétique 9 dans la zone fonctionnelle 2. Durant la phase de maintien mécanique 20 ledit au moins un aimant permanent est fixé mécaniquement à une paroi de l'enceinte du canal 5 par collage, soudage, etc...

On notera que ces deux phases d'insertion 19 et de maintien mécanique 20 peuvent être réalisées simultanément dès lors que cette sous-étape d'assemblage est mise en œuvre par un processus d'impression en trois dimensions dudit aimant permanent sur la paroi interne 4 de l'enceinte du canal 5 par exemple à partir de la technologie connue sous la marque FemtoprintTM.

Dans une autre variante du procédé, l'étape de transformation peut comprendre uniquement une sous-étape d'application 21 d'un fluide 6 comprenant des particules magnétiques 7 sur une surface interne 4 de ladite au moins une zone fonctionnelle 2 agencée sensiblement à l'opposé d'une surface de contact 3 fonctionnelle de cette zone 2. Ce fluide 6 est typiquement photodurcissable, thermodurcissable ou encore durcissable chimiquement. Autrement dit ce fluide 6 peut être un polymère photodurcissable ou thermodurcissable, tel que par exemple une résine époxy réticulable. On notera que lorsque le fluide 6 est durcississable chimiquement, il comprend alors deux composants un polymère tel que la résine epoxy et un agent polymérisant, le 1,4,7,10-tétraazadécane pour le durcissement. Au contact de ces deux composants, un polyépoxyde est formé. Ce durcissement chimique fonctionne selon le principe de la colle bicomposant AralditeTM. Cette sous-étape d'application 21 peut prévoir une phase de projection 22 sur la surface interne 4 de la zone fonctionnelle 2 d'au moins un faisceau collimaté ou localisé de fluide 6 comprenant des particules magnétiques 7. Cette phase 22 peut être effectuée sous forme d'une projection sur la surface interne 4 d'un faisceau unique de fluide 6. Le faisceau est par exemple configuré pour projeter sur la surface interne 4 un cordon continu/discontinu et localisé de ce fluide 6. En variante, la phase 22 peut être effectuée sous forme d'une projection sur la surface interne 4 de deux faisceaux collimatés ou localisés. Le premier faisceau comprend le fluide 6 contenant les particules magnétiques 7 et le deuxième faisceau comprenant une matière liquide choisie de sorte à provoquer une solidification du fluide 6 lorsqu'elle est mise en contact avec ce dernier. Ainsi que nous l'avons déjà évoqué précédemment, il s'agit ici du principe de la colle bicomposant AralditeTM, constituée d'une résine époxy comprenant les particules magnétiques 7 et une matière telle qu'un agent polymérisant, le 1,4,7,10-tétraazadécane. Au contact de ces deux composants, un polyépoxyde est formé.

Dans ce procédé, le lubrifiant magnétique 9 peut être à base de liquides ioniques comme décrit dans les documents de brevet CN104879384A et/ou JP2008081673A. A titre d'exemple, ce liquide ionique peut être composé d'un cation 1-butyl-3-methylimidazolium chloride ([bmim]Cl) et d'un anion FeCl3.

Ce lubrifiant magnétique 9 peut comprendre un ou plusieurs lubrifiants plus conventionnels dans lesquels des particules magnétiques 7 sont ajoutées comme par exemple des ferrofluides. Ces ferrofluides sont des suspensions colloïdales de nanoparticules ferromagnétiques ou ferrimagnétiques d'une taille de l'ordre de 10 nanomètres dans un fluide liquide. Dans ce contexte, un tel fluide devient magnétique lors de l'application d'un champ magnétique extérieur tout en conservant une stabilité colloïdale. Les ferrofluides sont le plus fréquemment composés de nanoparticules de magnétite (Fe3O4) ou de maghémite (γ-Fe2O3), qui sont tous deux des oxydes de fer. Le fluide peut être un liquide ionique ou un ester ou une huile minérale.

On notera qu'un tel lubrifiant magnétique 9 peut être additivé. On peut citer les additifs anti-usure, anti-corrosion, haute pression, antioxydants ou surfactants parmi une longue liste de possibilités.

Ainsi, l'invention permet de disposer d'une pièce mécanique 1 dont la zone fonctionnelle 2 est aimantée afin de confiner le lubrifiant magnétique 9 sur la surface de contact 3 fonctionnelle de cette zone. En effet, selon les variantes décrites, la matière développant un champ magnétique présente dans la zone fonctionnelle 2 de cette pièce exerce une force d'attraction sur ce lubrifiant 9 pour l'attirer sur la surface de contact 3 en fonction de la disposition/répartition de cette matière sous cette surface 3 et de la forme dudit au moins un canal 5 le cas échéant.

## Revendications

1. Procédé de fabrication d'une pièce mécanique (1) horlogère comprenant au moins une zone fonctionnelle (2) dans laquelle un lubrifiant (9) est susceptible d'être confiné, le procédé étant **caractérisé en ce qu'**il comprend une étape de construction (10) d'une ébauche de ladite pièce (1) comportant ladite au moins une zone fonctionnelle (2) et une étape de transformation (12) de ladite au moins une zone fonctionnelle en une zone fonctionnelle (2) aimantée apte à coopérer avec ledit lubrifiant (9) présentant des propriétés magnétiques dans la réalisation dudit confinement du lubrifiant (9) dans ladite au moins une zone, ladite étape de transformation (12) comprenant une sous-étape de réalisation (13) d'au moins un canal (5) dans une partie du corps de l'ébauche localisée dans ladite au moins une zone fonctionnelle (2) notamment derrière une surface de contact fonctionnelle (3) comprise dans la dite au moins une zone (2) et ladite étape de transformation (12) comprenant une sous-étape d'agencement (14) dans ledit au moins un canal (5) d'une matière développant un champ magnétique et ladite sous-étape d'agencement (14) comprenant :
- une phase d'insertion (15) d'un fluide (6) comprenant des particules magnétiques (7) dans ledit au moins un canal (5) ;
- une phase de magnétisation (16) des particules magnétiques (7) comprises dans ledit fluide (6) ;
- une phase de définition (17) d'une orientation de la polarité des particules magnétiques (7) comprises dans ledit fluide (6) relativement à une polarité dudit lubrifiant (9) ;
- une phase de durcissement (18) dudit fluide (6) comprenant les particules magnétiques (7) magnétisées et pourvues d'une polarité orientée.

2. Procédé selon la revendication précédente, **caractérisé en ce que** les phases de magnétisation (16), de définition (17) et de durcissement (18) sont réalisées sensiblement simultanément ou simultanément.

3. Procédé selon l'une quelconque des revendications précédentes, **caractérisé en ce que** la phase durcissement (18) consiste en une polymérisation par photo-réticulation et/ou par réticulation chimique.

4. Procédé selon la revendication 1, **caractérisé en ce que** l'étape de transformation (12) comprend une sous-étape d'application (21) d'un fluide (6) comprenant des particules magnétiques (7) sur une surface arrière (4) de ladite au moins une zone fonctionnelle (2) agencée sensiblement à l'opposé d'une surface de contact fonctionnelle (3) de cette zone (3).

5. Procédé selon l'une quelconque des revendications précédentes, **caractérisé en ce que** le fluide (6) est une résine réticulable.

6. Pièce mécanique (1) horlogère susceptible d'être obtenue selon un procédé conforme à l'une quelconque des revendications précédentes.

7. Pièce (1) selon la revendication précédente, **caractérisée en ce qu'**elle comprend au moins une zone fonctionnelle (2) dans laquelle un lubrifiant (9) est susceptible d'être confiné, ladite zone fonctionnelle (2) étant aimantée et apte à coopérer avec ledit lubrifiant (9) lorsqu'il présente des propriétés magnétiques.

8. Pièce (1) selon l'une des revendications 6 et 7, **caractérisée en ce qu'**elle est réalisée en une matière amagnétique et/ou ayant un indice de perméabilité magnétique faible voire nul.

## Patentansprüche

1. Verfahren zum Herstellen eines mechanischen horologischen Teils (1), das mindestens eine Funktionszone (2) umfasst, in der ein Schmiermittel (9) eingeschlossen werden kann, **dadurch gekennzeichnet, dass** es einen Schritt (10) zum Entwerfen eines Rohwerks des besagten Teils (1), das die mindestens eine Funktionszone (2) umfasst, und einen Schritt (12) zum Umwandeln der mindestens einen Funktionszone in eine magnetisierte Funktionszone (2), die beim Einschließen des Schmiermittels (9) in der mindestens einen Zone mit dem Schmiermittel (9) mit magnetischen Eigenschaften in Eingriff treten kann, umfasst, wobei der Umwandlungsschritt (12) einen Unterschritt (13) zum Herstellen mindestens eines Kanals (5) in einem Teil des Körpers des Rohwerks umfasst, der sich in der mindestens einen Funktionszone (2) befindet, insbesondere hinter einer funktionellen Kontaktoberfläche (3), die in der mindestens einen Zone (2) enthalten ist, und wobei der Umwandlungsschritt (12) einen Unterschritt (14) zum Anordnen eines ein Magnetfeld erzeugenden Materials in dem mindestens einen Kanal (5) umfasst, und wobei der Unterschritt (14) Folgendes umfasst:
- eine Phase (15) zum Einführen eines Fluids (6), das magnetische Partikel (7) umfasst, in den mindestens einen Kanal (5);
- eine Phase (16) zum Magnetisieren der magnetischen Partikel (7), die in dem Fluid (6) enthalten sind;
- eine Phase (17) zum Definieren einer Ausrichtung der Polarität der magnetischen Partikel (7), die in dem Fluid (6) enthalten sind, in Bezug auf eine Polarität des Schmiermittels (9);
- eine Phase (18) zum Härten des Fluids (6), das die magnetischen Partikel (7) umfasst, die magnetisiert sind und eine orientierte Polarität aufweisen.

2. Verfahren nach dem vorhergehenden Anspruch, **dadurch gekennzeichnet, dass** die Magnetisierungsphase (16), die Definitionsphase (17) und die Härtungsphase (18) im Wesentlichen gleichzeitig oder gleichzeitig durchgeführt werden.

3. Verfahren nach einem der vorhergehenden Ansprüche, **dadurch gekennzeichnet, dass** die Härtungsphase (18) aus einer Polymerisation durch Photovernetzung und/oder chemische Vernetzung besteht.

4. Verfahren nach Anspruch 1, **dadurch gekennzeichnet, dass** der Umwandlungsschritt (12) einen Unterschritt (21) zum Aufbringen eines Fluids (6), das magnetische Partikel (7) umfasst, auf eine hintere Oberfläche (4) der mindestens einen Funktionszone (2), die im Wesentlichen gegenüber einer funktionellen Kontaktoberfläche (3) dieser Zone (3) angeordnet ist, umfasst.

5. Verfahren nach einem der vorhergehenden Ansprüche, **dadurch gekennzeichnet, dass** das Fluid (6) ein vernetzbares Harz ist.

6. Mechanisches horologisches Teil (1), das unter Verwendung eines Verfahrens nach einem der vorhergehenden Ansprüche hergestellt werden kann.

7. Teil (1) nach dem vorhergehenden Anspruch, **dadurch gekennzeichnet, dass** es mindestens eine Funktionszone (2) umfasst, in der ein Schmiermittel (9) eingeschlossen werden kann, wobei die Funktionszone (2) magnetisiert ist und mit dem Schmiermittel (9) in Eingriff treten kann, wenn es magnetische Eigenschaften aufweist.

8. Teil (1) nach einem der Ansprüche 6 und 7, **dadurch gekennzeichnet, dass** es aus einem nichtmagnetischen Material und/oder einem Material mit geringer oder gar keiner magnetischen Permeabilität besteht.

## Claims

1. A method for manufacturing a mechanical timepiece part (1) comprising at least one functional area (2) wherein a lubricant (9) is able to be confined, the method being **characterised in that** it comprises a step (10) of constructing a blank of said part (1) including said at least one functional area (2) and a step of transforming (12) said at least one functional area into a magnetised functional area (2) capable of cooperating with said lubricant (9) having magnetic properties in achieving said confinement of the lubricant (9) in said at least one area,
said transformation step (12) comprising a sub-step (13) of making at least one channel (5) in a portion of the blank body located in said at least one functional area (2) in particular behind a functional contact surface (3) comprised in said at least one area (2) and
said transformation step (12) comprising a sub-step of arranging (14) in said at least one channel (5) a material developing a magnetic field, and
said arrangement sub-step (14) comprising:
- a phase (15) of inserting a fluid (6), comprising magnetic particles (7) in said at least one channel (5);
- a phase (16) of magnetising the magnetic particles (7) comprised in said fluid (6);
- a phase (17) of defining an orientation of the polarity of the magnetic particles (7) comprised in said fluid (6) relative to a polarity of said lubricant (9);
- a phase (18) of curing said fluid (6) comprising the magnetic particles (7) magnetised and provided with an oriented polarity.

2. The method according to the preceding claim, **characterised in that** the magnetisation (16), definition (17) and curing (18) phases are carried out substantially simultaneously or simultaneously.

3. The method according to any one of the preceding claims, **characterised in that** the curing phase (18) consists of polymerisation by photo-crosslinking and/or by chemical crosslinking.

4. The method according to claim 1, **characterised in that** the transformation step (12) comprises a sub-step (21) of applying a fluid (6) comprising magnetic particles (7) on a rear surface (4) of said at least one functional area (2) arranged substantially opposite a functional contact surface (3) of this area (3).

5. Method according to any one of the preceding claims, **characterised in that** the fluid (6) is a crosslinkable resin.

6. A mechanical timepiece part (1) able to be obtained by a method in accordance with any one of the preceding claims.

7. The part (1) according to the preceding claim, **characterised in that** it comprises at least one functional area (2) wherein a lubricant (9) is able to be confined, said functional area (2) being magnetised and capable of cooperating with said lubricant (9) when it has magnetic properties.

8. The part (1) according to one of claims 6 and 7, **characterised in that** it is made of a non-magnetic material and/or having a low or even zero magnetic permeability index.
